# EUROPÄISCHE PATENTSCHRIFT

(11) **EP 0 942 853 B1**
(45) Veröffentlichungstag und Bekanntmachung des Hinweises auf die Patenterteilung: **14.05.2003**
(21) Anmeldenummer: 98952686.8
(22) Anmeldetag: 01.10.1998
(51) Int. Cl.: B60R 21/32

(54) **UNFALL-SENSOR BESTEHEND AUS EINEM VERFORMBAREN TEIL DES FAHRZEUGES**
ACCIDENT SENSOR CONSISTING OF A DEFORMABLE PART OF THE VEHICLE
DETECTEUR D'ACCIDENT CONSTITUE D'UNE PARTIE DEFORMABLE D'UN VEHICULE

(30) Priorität: 14.10.1997 DE 19745309
(43) Veröffentlichungstag der Anmeldung: 22.09.1999
(73) Patentinhaber: Conti Temic microelectronic GmbH, 90411 Nürnberg (DE)
(72) Erfinder: SPIES, Hans, D-85278 Pfaffenhofen (DE)
(86) Internationale Anmeldenummer: EP9806266
(87) Internationale Veröffentlichungsnummer: WO99019175

(56) Entgegenhaltungen:
- EP-A- 0 305 654
- EP-A- 0 445 907
- WO-A-97/10128
- DE-A- 4 115 560
- DE-A- 4 237 404
- DE-A- 4 407 763
- DE-A- 19 537 383
- DE-A- 19 732 302
- US-A- 4 346 914
- US-A- 5 364 158

## Beschreibung

Die Erfindung betrifft einen Unfall-Sensor zur Erfassung eines Aufpralls gemäß dem Oberbegriff des Patentanspruches 1.

Bisherige Unfall-Sensoren sind als sogenannte Beschleunigungssensoren aufgebaut. Sie erfassen im Falle eines Unfalls die Beschleunigung bzw. Verzögerung, die beim Aufprall auftritt. Übersteigt die Beschleunigung bzw. Verzögerung einen kritischen Wert, so werden Kraftfahrzeug-Sicherheitseinrichtungen, wie Gurtstraffer oder Luftsack ausgelöst. In der Regel sind mehrere Beschleunigungssensoren am Kraftfahrzeug angebracht, wobei jeder Beschleunigungssensor die Beschleunigung bzw. Verzögerung in eine Raumrichtung erfaßt, um einen Frontalaufprall, Seitenaufprall und Überschlagen des Kraftfahrzeuges zu delektieren.

Ein gattungsbildender Unfall-Sensor ist aus der DE 44 07 763 A1 bekannt, der aus bandförmig zusammengefaßten aus Kunststoff hergestellten Lichtleitfasern besteht, die partiell zwischen Druckübertragungsmitteln verlaufend angeordnet sind, wobei diese Druckübertragungsmittel in einer Zone der Fahrzeughaut bzw. der Fahrzeugtür angeordnet sind, die voraussichtlich bei einem Unfall Stoßbelastungen ausgesetzt sein wird. Die Endstücke dieser Lichtleitfasern sind optisch mit einem Strahlungssender bzw. Strahlungsempfänger gekoppelt. Eine Druckeinwirkung auf die Lichtleitfasem im Bereich der Druckübertragungsmittel verändert die Strahlungsübertragungseigenschaften der Lichtleitfasern, die Rückschlüsse auf eine Deformation der Fahrzeughaut, insbesondere der Türaußenwandung infolge eines Unfalles schließen lassen.

Auch die in der DE 195 37 383 beschriebene Kraftfahrzeug-Sicherheitseinrichtung verwendet neben mindestens einem Beschleunigungssensor noch mindestens einen weiteren optischen Sensor, der vorzugsweise in einer Fahrzeugtür eines Fahrzeuges angeordnet ist. Dieser Sensor umfaßt ein langgestrecktes, lichtleitendes Element, an dessen Endstücken ein Strahlungssender bzw. ein Strahlungsempfänger angekoppelt ist. Das lichtleitende Element besteht aus einer Lichtleitfaser, die innerhalb einer Hülle angeordnet ist und von einem Druckübertragungsmittel schraubenförmig umwunden ist. Bei Einwirkung einer Kraft auf die Lichtleitfaser kommt es insbesondere durch das Zusammenwirken der Hülle und des Druckübertragungsmittels zu einer zeitweiligen Verformung der Lichtleitfaser, die deren Lichtübertragungseigenschaften beeinträchtigt, die zur Erkennung von insbesondere infolge eines Zusammenstoßes auftretenden Druckbelastungen ausgenutzt werden kann.

Nachteilig hierbei ist jedoch, daß für jede Raumrichtung ein Beschleunigungssensor benötigt wird. Auch können derartige Sensoren den Ort des Aufpralls nicht ermitteln. Diese Systeme ermitteln nicht direkt den Aufprall und die damit verbundene Verformung des Kraftfahrzeuges, sondern nur die durch die Verformung resultierende Beschleunigung bzw. Verzögerung.

Die US 43 46 914 offenbart eine auf akustische Schwingungen in tragenden Teilen der Fahrzeugkarosserie ansprechende Aufprallerkennungseinrichtung. Die Umwandlung der akustischen Signale in elektrische Signale geschieht hierbei durch einen oder mehrere piezoelektrischen Kraftsensoren, die mit einem oder mehreren akustischen Wellenleitern verbunden sind. Bei letzterem handelt es sich um dünne Stahlrohre, die sich vom zentralen Einbauort des oder der Sensoren aus in die aufprallgefährdeten Bereiche der Karosserie erstrecken und dort zur akustischen Kopplung mit tragenden Teilen dienen, welche an mehreren Stellen jeweils punktförmig verschweißt sind. Die Signalverarbeitung erfolgt durch einen Mikroprozessor. Sie bildet die Grundlage zur Feststellung einer die Auslösung des Insassenrückhaltesystems erfordernden Aufprallsituation.

Nachteilig hierbei ist jedoch, daß die Schallwellen in einem aufwendigen rohrförmigen Wellenleitersystem aufgefangen werden und von dort an ein zentrales Piezoelement transportiert werden, das die Schallwellen in ein Spannungssignal umwandelt. Dieses Spannungssignal wird dann an einen Mikroprozessor weitergeleitet. Neben der aufwendigen und teueren Verarbeitung des Röhrensystems ist es weiterhin nicht möglich mit dieser Vorrichtung auf die Herkunft des Signals zu schließen. Es erkennt nur die Unfallschwere. Die Stelle, an dem die Verformung zustande kommt, kann mit diesem Sensor nicht erkannt werden.

Die DE 37 29 019 A1 beschreibt eine Einrichtung zur Auslösung einer Sicherheitsvorrichtung. Hierbei wird durch die Zuordnung von Schall und/oder Körperschallsensoren ein System in die Lage versetzt einen Aufprall auf Hindernisse von sonstigen entsprechenden Geräuschen und Störungen bei kritischen Fahrbedingungen zu unterscheiden.

Der Erfindung liegt die Aufgabe zugrunde, einen Unfall-Sensor aufzuzeigen, der die Verformung eines Kraftfahrzeuges beim Auftreffen auf ein Hindernis anzeigt, der einfach und kostengünstig angebracht werden kann und der den Ort der Verformung am Kraftfahrzeug erkennt.

Die Aufgabe wird erfindungsgemäß durch die Merkmale des Patentanspruches 1 gelöst.

Die mit der Erfindung erzielten Vorteile bestehen darin, daß mit diesem Unfall-Sensor der genaue Unfallort am Fahrzeug, d. h. der Ort der Verformung durch eine Auswertung des Signalverlaufes und eine Laufzeitbestimmung detektiert werden kann. Desweiteren ist diese Lösung im Vergleich zu anderen Unfall-Sensoren sehr kostengünstig und einfach zu realisieren. Dadurch lassen sich die Sicherheitsvorrichtungen ohne Mehraufwand gezielter auslösen.

Vorteilhafte Weiterbildungen der Erfindung ergeben sich aus den abhängigen Ansprüchen. Hierbei ist das Kunststoffteil um das gesamte Kraftfahrzeug angeordnet und dient gleichzeitig als Stoßfänger und/oder Kratzschutz. Des weiteren kann durch die räumliche Ausrichtung der Signalempfänger der Ort der Verformung am Kraftfahrzeug bestimmt werden.

Ausführungsbeisplele der Erfindung sollen anhand der Figuren dargestellt werden.

Es zeigen:
- Figur 1:: Kraftfahrzeug mit umlaufender Kunststoffschicht,
- Figur 2A:: Messung des Strahlengangs im Kunststoff, und
- Figur 2B:: Optische Unfallerfassung durch veränderten Strahlengang.

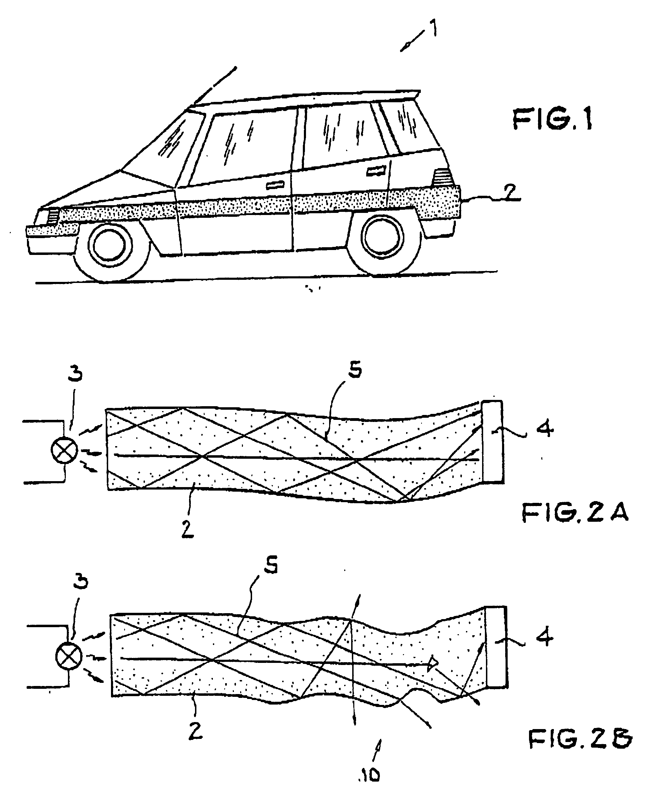

Figur 1 zeigt ein Kraftfahrzeug 1 mit umlaufendem Kunststoffteil 2. Das abgebildete Kraftfahrzeug 1 ist in den Aufprallbereichen ganz oder teilweise mit diesem Kunststoffteil 2 umgeben. Das Kunststoffteil 2, das das Kraftfahrzeug 1 im Anwendungsbeispiel im unteren Bereich umgibt, dient als Kratzschutz und bei kleineren Auffahrunfällen oder beim Ein- und Ausparken als Stoßschutz um eine Beschädigung des Lackes bzw. der Karosserie zu vermeiden. Dieses Kunststoffteil 2, das bei den meisten Unfällen immer zuerst beschädigt wird, ist selbst oder beinhaltet zumindest einen Teil des Unfall-Sensors. Dieses Kunststoffteil 2 kann durchgehend oder nur partiell um das Fahrzeug 1 angeordnet sein. In allen Fallen erfüllt das Kunststoffteil 2 jedoch mehrere Aufgaben.

Das Kunststoffteil 2 ist so beschaffen, daß es bei der Verformung seine Strahlungs. durchlässigkeit verändert. Der Kunststoffteil 2 am Kraftfahrzeug 1 kann gleichzeitig als Verformungsmesser verwendet werden, der ein für einen bestimmten Verformungsgrad typisches Signal optisch aussendet. Aufgrund der Laufzeiten, die das Signal vom Verformungsort bis zum Signalempfänger benötigt, kann der Verformungsort bestimmt werden.

Auch kann das Kunststoffteil 2 aus mehreren Schichten bestehen, die unterschiedliche Eigenschaften, wie z.B. Lichtdurchlässigkeit besitzen,

Figur 2A zeigt das Prinzip der Messung des Strahlung bzw. des Strahlengangs 5 im Kunststoffteil 2. Diese Figur zeigt ein strahlungsdurchlässiges Kunststoffteil 2, das um ein Kraftfahrzeug wie in Figur 1 beschrieben angeordnet ist. Hierbei ist es unwesentlich ob das gesamte Kunststoffteil 2 strahlungsdurchlässig ist oder ob zumindest eine strahlungsdurchlässige Schicht auf dem oder im Kunststoffteil angeordnet ist. Desweiteren beinhaltet der Aufbau eine Strahlungsquelle 3 und einen Strahlungsdetektor 4. Der Strahlungsdetektor 4 mißt die Strahlungs- bzw. Lichtmenge, die von der Strahlungs- bzw. Lichtquelle über den Lichtleiter transportiert wird. Der Lichtleiter sollte derart abgeschirmt sein, daß eine von außen einfallende Strahlung nicht an den Strahlungsdetektor 4 gelangen kann. Solange das Kunststoffteil 2 nicht beschädigt ist, wird immer die gleiche Lichtmenge den Strahlungsdetektor 4 erreichen. Wird jedoch das Kunststoffteil 2 und insbesondere der Lichtleiter beschädigt, so zeigt Figur 2B die optische Unfallerfassung durch den veränderten Strahlengang. Bei der Deformation 10 des Kunststoffteils 2 wird der Strahlengang 5 verändert und die Strahlungsmenge, die den Strahlungsempfänger 4 erreicht reduziert. Die von der Strahlungs- bzw. Lichtquelle 3 ausgesendete Strahlung nimmt einen anderen Weg wie in Figur 2A dargestellt. Dadurch verändert sich sowohl die Strahlungsverteilung als auch die Strahlungsmenge, die vom Strahlungsdetektor 4 erfaßt wird. Während der Deformation 10 des Kunststoffteils 2 verändern sich diese Parameter ständig solange bis der Verformungsprozeß abgeschlossen ist. Die Veränderung der Strahlungsmenge über die Zeit und die Veränderung der Strahlungsverteilung über die Zeit erlauben Rückschlüsse auf die Ursache der Beschädigung des Kunststoffteiles. Durch eine nicht abgebildete Auswerteelektronik, wie sie z.B. in der DE 37 29 019 offenbart wird, kann die Unfallschwere, der Unfatlhergang und der Deformationsort am Kraftfahrzeug bestimmt werden.

## Patentansprüche

1. Unfall-Sensor für ein Kraftfahrzeug (1) zur Auslösung eines Kraftfahrzeug-Sicherheitssystems, bestehend aus einem verformbaren und strahlungsdurchlässigen Kunststoffteil (2) und einem strahlungsempfindlichen Detektor (4), welcher die Verformung am Kunststoffteil (2) optisch erfaßt, wobei das verformbare Kunststoffteil (2) mit einer definierten Lichtmenge durchdrungen wird und wobei sich bei seiner Verformung der Strahlengang (5) im Kunststofftell (2) und somit die definierte Lichtmenge verändert und der strahlungsempfindlichen Detektor (4) die durch die Verformung veränderte Lichtmenge erfaßt **dadurch gekennzeichnet, dass** das verformbare Kunststoffteil außen am Kraftfahrzeug (1) angeordnet ist, und aufgrund des Signalverlaufes und einer Laufzeitbestimmung zwischen Aufprall und Signalerfassung der Ort des Aufpralls am Kraftfahrzeug (1) bestimmt wird.

2. Unfall-Sensor für ein Kraftfahrzeug (1) zur Auslösung eines Kraftfahrzeugsicherheitssystems nach Anspruch 1, **dadurch gekennzeichnet, dass** das verformbare Kunststoffteil (2) gleichzeitig als Stoß- und Kratzschutz für die Karosserie dient.

3. Unfall-Sensor für ein Kraftfahrzeug (1) zur Auslösung eines Kraftfahrzeugsicherheitssystems nach Anspruch 1 oder 2, **dadurch gekennzeichnet, dass** durch die räumliche Ausrichtung des strahlungsempfindlichen Detektors (4) der Ort des Aufpralls am Kraftfahrzeug (1) bestimmt werden kann.

## Claims

1. An accident sensor for a motor vehicle (1) for triggering a safety system in the motor car, consisting of a deformable and radiation transparent synthetic material part (2) and a radiation sensitive detector (4) which optically detects the deformation of the synthetic material part (2), wherein the deformable synthetic material part (2) is penetrated by a defined quantity of light and wherein, in the course of the deformation of said part, the beam path (5) in the synthetic material part (2) and hence the defined quantity of light changes and the radiation sensitive detector (4) detects the quantity of light that has been changed by virtue of the deformation, **characterised in that** the deformable synthetic material part is disposed externally on the motor vehicle (1) and the position of the impact on the motor vehicle (1) is determined on the basis of the signal waveform and a determination of the transit time between the impact and the detection of the signal.

2. An accident sensor for a motor vehicle (1) for triggering a safety system in the motor vehicle in accordance with Claim 1, **characterised in that** the deformable synthetic material part (2) simultaneously serves as a collision and scratch protector for the bodywork.

3. An accident sensor for a motor vehicle (1) for triggering a safety system in the motor vehicle in accordance with claim 1 or 2, **characterised in that** the position of the impact on the motor vehicle (1) can be determined by the spatial orientation of the radiation sensitive detector (4).

## Revendications

1. Détecteur d'accident pour un véhicule (1) en vue du déclenchement d'un système de sécurité de véhicule, se composant d'une pièce de matière plastique (2) déformable et transparente au rayonnement et d'un détecteur (4) sensible au rayonnement, qui détecte optiquement la déformation sur la pièce de matière plastique (2), la pièce de matière plastique déformable (2) étant traversée par une quantité de lumière définie et dans le cas de sa déformation, le trajet des rayons (5) dans la pièce de matière plastique (2) et ainsi la quantité de lumière définie se modifie et le détecteur sensible au rayonnement (4) détecte la quantité de lumière modifiée par la déformation, **caractérisé en ce que** la pièce de matière plastique déformable est disposée à l'extérieur sur le véhicule (1) et en raison de l'allure du signal et d'une détermination du temps de transit entre le choc et la détection du signal, l'endroit du choc sur le véhicule (1) est déterminé.

2. Capteur d'accident pour un véhicule (1) en vue du déclenchement d'un système de sécurité de véhicule selon la revendication 1, **caractérisé en ce que** la pièce de matière plastique déformable (2) sert simultanément de pare-chocs et de protection contre les rayures pour la carrosserie.

3. Capteur d'accident pour un véhicule (1) en vue de la détection d'un système de sécurité de véhicule selon la revendication 1 ou 2, **caractérisé en ce que** grâce à l'alignement spatial du détecteur (4) sensible au rayonnement, l'endroit du choc sur le véhicule (1) peut être déterminé.
